# EUROPÄISCHE PATENTSCHRIFT

(11) **EP 1 465 327 B1**
(45) Veröffentlichungstag und Bekanntmachung des Hinweises auf die Patenterteilung: **07.05.2008**
(21) Anmeldenummer: 04005329.0
(22) Anmeldetag: 05.03.2004
(51) Int. Cl.: H02K 35/02

(54) **Vibrationsbetriebener und in ein Substrat integrierter Generator**
Vibration-powered and in a substrate integrated generator
Generateur à l'energie vibratoire et integré dans une substrat

(30) Priorität: 07.03.2003 DE 10310161
(43) Veröffentlichungstag der Anmeldung: 06.10.2004
(73) Patentinhaber: Infineon Technologies AG, 81669 München (DE)
(72) Erfinder: Schindler, Günther, 80802 München (DE)
(74) Vertreter: Viering, Jentschura & Partner

(56) Entgegenhaltungen:
- LI W J ET AL: "Infrared signal transmission by a laser-micromachined vibration-induced power generator" PROCEEDINGS 43RD IEEE MIDWEST SYMPOSIUM ON CIRCUITS AND SYSTEMS, Bd. 1, 8. August 2000 (2000-08-08), Seiten 236-239, XP010558118
- MENINGER S ET AL: "Vibration-to-electric energy conversion" PROCEEDINGS 1999 INTERNATIONAL SYMPOSIUM ON LOW POWER ELECTRONICS AND DESIGN. (ISLPED). SAN DIEGO, CA, AUG. 16 - 17, 1999, INTERNATIONAL SYMPOSIUM ON LOW POWER ELECTRONICS AND DESIGN, NEW YORK, NY : ACM, US, 16. August 1999 (1999-08-16), Seiten 48-53, XP010355950 ISBN: 1-58113-133-X
- WAGNER B ET AL: "Microfabricated actuator with moving permanent magnet" PROCEEDINGS OF THE WORKSHOP ON MICRO ELECTRO MECHANICAL SYSTEMS. INVESTIGATION OF MICRO STRUCTURES, SENSORS, ACTUATORS, MACHINES AND ROBOTS. NARA, JP., JAN. 30 - FEB. 2, 1991, NEW YORK, IEEE, US, Bd. WORKSHOP 4, 30. Januar 1991 (1991-01-30), Seiten 27-32, XP010039601 ISBN: 0-87942-641-1
- WILLIAMS C B ET AL: "Development of an electromagnetic micro-generator" IEE PROCEEDINGS: CIRCUITS DEVICES AND SYSTEMS, INSTITUTION OF ELECTRICAL ENGINEERS, STENVENAGE, GB, Bd. 148, Nr. 6, 5. Dezember 2001 (2001-12-05), Seiten 337-342, XP006017626 ISSN: 1350-2409
- T.M.LIAKOPOULOS, W. ZHANG, C.H.AHN: "Micromashined thick permanent magnet arrays on silicon wafers" IEEE TRANSACTIONS ON MAGNETICS, Nr. 5, September 1996 (1996-09), Seiten 5154-5156, XP002292024

## Beschreibung

Die Erfindung betrifft eine monolithisch integrierte Schaltkreis-Anordnung.

Der Einsatz von kontaktlos betreibbaren Computerchips, bei denen verdrahtete Zuleitungen entbehrlich sind ("ubiquitious computing"), gewinnt zunehmend an Bedeutung. Ein wichtiger Anwendungsbereich dieses technischen Gebietes ist die Sensorik, da für viele Anwendungen von Sensoren eine drahtlose Übermittlung eines Sensorsignals an eine zentrale Steuereinheit wünschenswert ist.

Die Kommunikation eines solchen kontaktlosen Sensor-Computerchips mit einer zentralen Steuer- oder Recheneinheit zum Weiterverarbeiten eines kontaktlos übermittelten Sensorsignals kann beispielsweise über ein drahtloses Netz (z.B. Bluetooth^{™}) erfolgen.

Da bei solchen drahtlosen Computerchips eine kostengünstige, mechanisch unabhängige und universell einsetzbare Verwendbarkeit wünschenswert ist, wird für solche Computerchips eine drahtlose Energieversorgung angestrebt. Die Notwendigkeit einer drahtgebundenen Stromversorgung würde zu sehr hohen Kosten führen und zudem die Einsatzmöglichkeiten beschränken.

Bei kontaktlosen Identifikationslabeln (sogenannten "ID-Tags") wird häufig unter Verwendung einer in dem Identifikationslabel enthaltenen Spule ein elektromagnetisches Feld in das Identifikationslabel eingekoppelt. Unter Verwendung eines Gleichrichters kann die induktiv eingekoppelte elektrische Energie gleichgerichtet werden, so dass ein Gleichstrom zum Versorgen des Identifikationslabels bereitgestellt werden kann. Diese Art der Energieversorgung weist jedoch den Nachteil auf, dass das Identifikationslabel zum induktiven Einkoppeln elektromagnetischer Feldenergie stets in einem Bereich mit sehr hoher elektrischer Feldstärke positioniert sein muss, was die Reichweite eines solchen kontaktlosen Chips stark einschränkt.

Aus [1] ist ein makroskopischer Generator mit einem Gesamtvolumen von ungefähr einem Kubikzentimeter bekannt, bei dem ein Permanentmagnet, beispielsweise ein 21 Milligramm schwerer Seltene-Erde-Permanentmagnet, in dem zentralen Bereich einer Kupfer-Feder angeordnet wird, und einer Vibration ausgesetzt wird. In einer Spule kann aufgrund des von den vibrierenden Permanentmagneten generierten zeitlich veränderlichen Magnetfelds eine Induktionsspannung induziert werden, welche beispielsweise zur Versorgung einer extern vorgesehenen elektrischen Last verwendet wird.

Allerdings ist der an eine elektrische Last anzuschließende in [1] beschriebene Generator zur Energieerzeugung aus der Vibration eines makroskopischen Permanentmagneten aufwändig in der Herstellung und hat immer noch ein für manche Anwendungen zu großes Volumen.

In [2] sind Sensoren und Aktuatoren sowie Microelectromechanical Systems (MEMS) beschrieben.

In [3] ist ein Generator zur Energieerzeugung aus Vibration mit einem Gesamtvolumen von ∼1 cm³ beschrieben, welcher Generator mittels Laser hergestellte Federn verwendet, um mittels des Faradayschen Gesetzes mechanische Energie in elekrische Energie umzuwandeln.

Aus [4] ist eine Transpondereinheit bekannt, welche ein Trägersignal von einer Abfrageeinrichting empfängt.

In [5] ist ein vollintegrierter mikromagnetischer Aktuator mit einem mehrschichtigen Mäander-Magnetkern beschrieben.

In [6] wird eine Design-Methodik für Linear-Mikrogeneratoren beschrieben und wird auf das Design eines elektromagnetischen Mikrogenerators der mm-Skala angewendet.

In [7] ist eine Vorrichtung zum Erzeugen elektrischer Energie aus mechanischer Energie in einer vibrierenden Umgebung beschrieben.

In [8] ist eine Induktivität in Form einer Leiterschleife und ein in der Mitte einer spiralförmigen Feder befestigter Permanentmagnet offenbart, welcher sich relativ zu der Induktivität bewegen kann, so dass eine auf die spiralförmige Feder und dem Permanentmagneten einwirkende Vibration zu einer Induktion in der Leiterschleife führt. Der an der spiralförmigen Feder befestigte Permanentmagnet kann lediglich um eine Achse parallel zu der Leiterschleife und damit zum Substrat rotieren, d.h. die spiralförmige Feder führt bezüglich des Substrats eine Torsionsbewegung durch.

Weiterhin ist in [9] ein System zum Umwandeln mechanischer Vibration in elektrische Energie beschrieben. Die Energie wird übertragen mittels Verwendung eines variablen Kondensators, der mittels MEMS-Technologie gebildet ist.

Weiterhin beschreibt [10] ein Permanentmagnetenarray aus CoNiMnP, wobei 1500 Magneten in kubischer Form auf einem Siliziumsubstrat angeordnet sind, wobei die Permanentmagneten eine ziemlich hohe magnetische Koerzitivkraft von 800 bis 1300 Oe aufweist.

Der Erfindung liegt insbesondere das Problem zugrunde, eine mit ausreichend geringem Aufwand herstellbare Anordnung mit einer funktionellen Einheit bereitzustellen, welche funktionelle Einheit autonom mit elektrischer Energie versorgt werden kann und somit auch für kontaktlose Anwendungen geeignet ist.

Das Problem wird durch eine Schaltkreis-Anordnung mit den Merkmalen gemäß dem unabhängigen Patentanspruch gelöst.

Die erfindungsgemäße Schaltkreis-Anordnung ist eine monolithisch integrierte Schaltkreis-Anordnung mit einem Substrat und einer in/oder auf dem Substrat gebildeten funktionellen Einheit. Ferner weist die monolithisch integrierte Schaltkreis-Anordnung eine in und/oder auf dem Substrat gebildete und mit der funktionellen Einheit gekoppelte Energieversorgungseinheit auf, die eine Induktivität und einen Permanentmagneten aufweist. Induktivität und Permanentmagnet sind derart eingerichtet, dass unter Einwirken einer Vibration auf die Schaltkreis-Anordnung der Permanentmagnet relativ zu der Induktivität parallel zur Substratebene beweglich ist, so dass mittels der Induktivität eine elektrische Induktionsspannung zum Versorgen der funktionellen Einheit mit elektrischer Energie induzierbar ist.

Eine Grundidee der Erfindung ist darin zu sehen, dass eine monolithisch in einem gemeinsamen Substrat, wie beispielsweise einem Halbleitersubstrat, integrierte Schaltkreis-Anordnung geschaffen wird, welche eine ebenfalls in dem Substrat monolithisch integrierte Energieversorgungseinheit aufweist. Die mit der zu versorgenden monolithisch in dem Substrat integrierten funktionellen Einheit gekoppelte Energieversorgungseinheit wandelt die in einer externen Vibration (z.B. eines laufenden Motors) enthaltene mechanische Energie gemäß dem Generatorprinzip On-Chip in elektrische Energie um. Somit kann die funktionelle Einheit, wie zum Beispiel ein Sensor, mit der zu seinem Betrieb erforderlichen elektrischen Energie autonom, d.h. ohne zusätzliche externe Komponenten, versorgt werden.

Indem alle Komponenten der monolithisch integrierten Schaltkreis-Anordnung mit funktioneller Einheit und Energieversorgungseinheit gemeinsam in einem Substrat monolithisch integriert sind, ist eine echte On-Chip Energieversorgung ermöglicht. Dadurch sind auch die Transportwege für die elektrischen Energieversorgungssignale verkürzt. Somit erfährt die erzeugte elektrische Energie in Form eines elektrischen Induktionsstroms bei dem Weg von der Energieversorgungseinheit zu der funktionellen Einheit aufgrund der gemeinsamen Integration in dem Substrat nur sehr geringe ohmsche Verluste, so dass eine effizientere Energieversorgung und daher ein verbesserter Wirkungsgrad erreicht sind.

Erfindungsgemäß ist eine Schaltkreis-Anordnung mit On-Chip-Energieversorgung mit verringerter Dimension geschaffen, wodurch eine fortgesetzte Miniaturisierung erreicht ist. Die Schaltkreis-Anordnung kann beispielsweise in einem miniaturisierten Sensorchip Anwendung finden, welcher dann in der ihm zugeordneten Sensorumgebung einen sehr geringen Platzbedarf aufweist.

Ferner bewirkt die On-Chip-Integration von funktioneller Einheit und Energieversorgungseinheit eine erheblich vereinfachte Herstellbarkeit der erfindungsgemäßen Schaltkreis-Anordnung. Anschaulich sind weniger Prozessschritte zum Ausbilden der Schaltkreis-Anordnung erforderlich, da die Prozessierung der funktionellen Einheit und die Prozessierung der Energieversorgungseinheit samt ihrer integrierten Komponenten (Induktivität und Permanentmagnet) prozesstechnisch zeitlich parallel möglich ist. Anders ausgedrückt kann die IC-Prozessierung zum Bilden der funktionellen Einheit und das Herstellen der Energieversorgungseinheit simultan erfolgen.

Anschaulich ausgedrückt wird eine externe Vibration, beispielsweise die Vibration eines Motors, an welchem ein Sensor als funktionelle Einheit angebracht ist, dazu verwendet, dass ein Permanentmagnet relativ zu einer Induktivität parallel zur Substratebene bewegt wird, wodurch das Magnetfeld des Permanentmagneten in zeitlich veränderter Weise auf die Induktivität einwirkt, so dass der magnetische Fluss durch die Spule einer zeitlichen Veränderung ausgesetzt ist, wodurch eine Induktionsspannung zwischen den Enden der Induktivität erzeugt wird. Die in dieser Spannung (bzw. einem zugehörigen Strom) enthaltene elektrische Energie wird dann zur Energieversorgung der funktionellen Einheit verwendet.

Als funktionelle Einheit im Sinne der Erfindung wird insbesondere diejenige Sektion der erfindungsgemäßen Schaltkreis-Anordnung verstanden, welche die eigentliche Funktionalität der Schaltkreis-Anordnung nach außen hin erfüllt und die zum Erfüllen der ihr zugewiesenen Funktionalität elektrische Energie benötigt. Die funktionelle Einheit dient der Erfüllung einer der Schaltkreis-Anordnung zugewiesenen Aufgabe. So kann die funktionelle Einheit beispielsweise ein Sensor und/oder eine integrierte Schaltkreiskomponente (z.B. mit einer CPU und/oder einem Speicher) sein. Ein Charakteristikum der funktionellen Einheit ist insbesondere, dass die funktionelle Einheit zur Erfüllung der ihr zugewiesenen Funktionalität elektrischer Energie bedarf, welche mittels der Energieversorgungseinheit bereitgestellt wird. Die Bandbreite möglicher Funktionen, die der funktionellen Einheit zugewiesen sein können, ist groß. Die funktionelle Einheit kann somit auch als Nutz-Einrichtung angesehen werden. Sie stellt einen energieverbrauchenden Bereich der erfindungsgemäßen Schaltkreis-Anordnung dar.

Erfindungsgemäß ist somit eine miniaturisierte On-Chip-Lösung für die Energieversorgung einer vorzugsweise drahtlos vorgesehenen monolithisch integrierten Schaltkreis-Anordnung, insbesondere der darauf gebildeten funktionellen Einheit, geschaffen.

Indem die Erfindung mechanische Vibrationen nutzt, um anschaulich nach dem Generatorprinzip elektrischen Strom zu gewinnen, kann die erfindungsgemäße Schaltkreis-Anordnung zum Beispiel mit einem Sensor als funktionale Einheit zum Überwachen eines Motors eingesetzt werden, wobei die Vibrationen des Motors zur Energieversorgung des Sensors eingesetzt wird.

Die Dimensionen, in welcher die erfindungsgemäße Schaltkreis-Anordnung bevorzugt ausgebildet ist, sind typische Dimensionen der Halbleitertechnologie. Die eindimensionalen Ausdehnungen der Einzelkomponenten können typischerweise in einem Bereich zwischen Nanometern und etwa hundert Mikrometern liegen, vorzugsweise zwischen etwa hundert Nanometern und einigen zehn Mikrometern.

Bevorzugte Weiterbildungen der Erfindung ergeben sich aus den abhängigen Ansprüchen.

Das Substrat kann ein Halbleitersubstrat, insbesondere ein Silizium- oder Germaniumsubstrat sein. Das Halbleitersubstrat kann ein Wafer oder ein Chip sein. Die monolithisch integrierte Schaltkreis-Anordnung kann zum Beispiel in CMOS-Technologie realisiert sein.

Die funktionelle Einheit kann ein Sensor sein, insbesondere ein Drehzahl-Sensor, ein Temperatursensor, ein Drucksensor, ein chemischer Sensor, ein Gassensor, ein Biosensor, ein Strahlungssensor zum Detektieren beispielsweise elektromagnetischer Strahlung und/oder ein Sensor zum Erfassen einer Vibrationsfrequenz. Ist der Sensor als Sensor zum Erfassen einer Vibrationsfrequenz vorgesehen, so kann die zu detektierende mechanische Vibration als Detektionssignal und auch als Quelle zum Erzeugen elektrischer Energie in der erfindungsgemäßen Energieversorgungseinheit dienen. Die funktionelle Einheit kann aber auch ein Mikro-Roboter sein, eine Mikro-Pinzette, etc.

Die erfindungsgemäße Schaltkreis-Anordnung kann zum Anbringen an einer Vibrationsquelle eingerichtet sein. Anschaulich kann die Schaltkreis-Anordnung zum Beispiel an einem Motor, oder an einem Mobiltelefon angeschraubt oder aufgeklebt werden. Die Schaltkreis-Anordnung kann auch an einem schlagenden Herzen angebracht sein.

Die Vibrationsquelle weist vorzugsweise einen Motor auf. Dieser Motor kann ein Verbrennungsmotor (z.B. eines Kraftfahrzeugs) oder ein Elektromotor sein.

Die Schaltkreis-Anordnung der Erfindung kann eine Kommunikationsschnittstelle zum kontaktlosen Kommunizieren mit einer externen Steuereinheit/Zentrale aufweisen. Beispielsweise unter Verwendung des Bluetooth™-Standards kann eine Übermittlung eines Steuersignals von einer Zentrale an die Schaltkreis-Anordnung erfolgen. Auch kann kontaktlos, das heißt beispielsweise unter Aussendung elektromagnetischer Strahlung (wie beispielsweise Radiowellen) zum Zwecke des Signalaustauschs zwischen Schaltkreis-Anordnung und externer Steuereinheit, die Schaltkreis-Anordnung ein Signal an die Zentrale übermitteln. Beispielsweise kann die Schaltkreis-Anordnung ein detektiertes Sensorsignal kontaktlos über die Kommunikationsschnittstelle an die externe Steuereinheit melden.

Die Vorteile einer On-Chip-Energieversorgung der funktionellen Einheit der Schaltkreis-Anordnung kommen bei einer kontaktlosen Anwendung besonders stark zum Tragen. Bevorzugte Einsatzgebiete der Erfindung sind daher kontaktlose Chipkarten, Identifikationslabels ("ID-Tags"), etc.

Die Energieversorgungseinheit kann eine Gleichrichtereinrichtung zum Gleichrichten einer Induktionsspannung der Induktivität aufweisen, zum Versorgen der funktionellen Einheit mit einer Gleichspannung. Da viele Sensoren oder integrierte Schaltkreis-Komponenten mit einer elektrischen Gleichspannung bzw. einem elektrischen Gleichstrom zu betreiben sind, ist es für solche Anwendungen vorteilhaft, die aufgrund des Vibrierens erzeugte Wechselspannung bzw. den mit dieser in Zusammenhang stehenden Wechselstrom vor dem Einkoppeln in die funktionelle Einheit gleichzurichten. Hierfür kann eine aus dem Stand der Technik bekannte Gleichrichtereinrichtung (z.B. eine Diode) verwendet werden.

Die Energieversorgungseinheit kann eine Energiespeichereinheit aufweisen, in der mittels der Induktionsspannung generierte elektrische Ladungsträger zwischenspeicherbar sind. Anschaulich kann aufgrund einer Vibration erzeugte elektrische Energie gemäß dem Batterieprinzip in der Energiespeichereinheit gespeichert werden und später bedarfsweise ausgegeben werden. Soll beispielsweise in einem Motor auch in einem Zustand, in welchem dieser von einer Vibration frei ist, ein Parameter wie beispielsweise eine Temperatur erfasst werden, so kann während des Betriebs des Motors, in welchem dieser mechanisch vibriert, elektrische Energie in der Energieversorgungseinheit der Schaltkreis-Anordnung generiert werden und diese in der Energiespeichereinheit gespeichert werden. Daher kann die Schaltkreis-Anordnung auch in Abwesenheit einer mechanischen Vibration mit zuvor gespeicherter elektrischer Energie betrieben werden.

Die Energiespeichereinheit weist vorzugsweise eine Kapazität auf, welche anschaulich elektrische Ladungsträger eines gleichgerichteten Induktionsstroms akkumuliert und diese später bedarfsweise an die funktionelle Einheit abgeben kann.

Die Induktivität kann beispielsweise eine elektrisch leitfähige Mäanderstruktur sein. Diese kann in und/oder auf dem Substrat ausgebildet sein. Alternativ kann die Induktivität einer Anordnung aus einer Mehrzahl von elektrisch leitfähigen und in der Substratebene nebeneinander, ineinander und/oder bezüglich der Substratebene vertikal übereinander gebildeten Mäanderstrukturen gebildet sein. Das Zusammenschalten bzw. Verkoppeln mehrerer Mäanderstrukturen in Substratebene und/oder senkrecht zu dieser kann den Wert der Induktivität bzw. den abgedeckten Flächenbereich erhöhen, in welchem der Permanentmagnet einen zeitlich veränderlichen magnetischen Fluss bewirkt.

Alternativ kann die Induktivität eine elektrisch leitfähige Spiralstruktur sein. Diese kann beispielsweise aus im Wesentlichen konzentrischen Kreisringen mit unterschiedlichen Radi bestehen, die ineinander angeordnet sind und miteinander gekoppelt sind. Alternativ kann die Spiralstruktur aus einer Mehrzahl von ineinander angeordneten rechteckigen Leiterbahnstrukturen, optional mit abgerundeten Kanten, realisiert sein, wobei die ineinander angeordneten Rechtecke miteinander elektrisch gekoppelt sind. Die Induktivität kann auch eine Anordnung aus einer Mehrzahl von elektrisch leitfähigen und in der Substratebene nebeneinander, ineinander und/oder zu der Substratebene vertikal übereinander gebildeten Spiralstrukturen sein.

Der Permanentmagnet kann freischwebend oberhalb des Substrats angeordnet sein und mittels mindestens einem elastischen Federelement mit dem Substrat gekoppelt sein. Ein freischwebender Permanentmagnet kann sich besonders effektiv relativ zu einer Induktivität, die in dem Substrat ortsfest integriert ist, bewegen. Das Bilden einer freischwebenden Permanentmagnetstruktur bei einem integrierten Schaltkreis kann beispielsweise dadurch erfolgen, dass eine Hilfsschicht auf dem Substrat (das beispielsweise darin/darunter die Induktivität enthält) ausgebildet wird und darüber eine Permanentmagnetschicht abgeschieden wird, welche nachfolgend strukturiert wird. Nach dem Strukturieren der Permanentmagnetschicht zum Bilden des Permanentmagneten kann beispielsweise mittels Unterätzens die Hilfsschicht entfernt werden, wodurch der Permanentmagnet freischwebend realisiert wird. An den Enden des Permanentmagneten kann dieser mit dem Substrat oder mit einem elastischen Federelement, welches an Randbereichen des Substrats gebildet sein kann, gekoppelt werden. Es ist ferner anzumerken, dass alternativ zu einem freischwebenden Permanentmagneten die Induktivität freischwebend vorgesehen sein kann und der Permanentmagnet in dem Substrat ortsfest integriert vorgesehen werden kann. Wichtig ist lediglich eine Relativbewegung zwischen Permanentmagnet und Induktivität, um eine zeitliche Veränderung des magnetischen Flusses durch die Induktivität zu realisieren.

Der Permanentmagnet kann eine Kammstruktur oder eine Mehrzahl von Kammstrukturen aufweisen. Eine Kammstruktur mit einem zentralen Haltebereich und einer Mehrzahl von ausgehend von dem Haltebereich (z.B. orthogonal dazu) gebildeten Zähnen ist leicht fertigbar, robust und ermöglicht eine effektive elektrische Energieversorgung in Kombination beispielsweise mit einer Induktivität der Mäanderform. Eine solche Kammstruktur wird in der MEMS-Technologie ("microelectromechanical manufacturing systems") zum Beispiel in Beschleunigungssensoren von Airbags verwendet. Im Unterschied zu solchen Systemen dient die Kammstruktur gemäß der erfindungsgemäßen Schaltkreis-Anordnung zum Erzeugen elektrischer Energie aus mechanischer Vibrationsenergie. Wenn sich eine solche Kammstruktur über einer Spulenanordnung (Induktivität) bewegt, kann in der Spulenanordnung eine Induktionsspannung induziert werden, welche zur Energieversorgung genutzt wird.

Alternativ zu der Kammstruktur kann der Permanentmagnet eine Zungenstruktur oder eine Mehrzahl von Zungenstrukturen aufweisen. In einem solchen Fall kann der Permanentmagnet nur an einem Ende mittels eines Federelements an dem Substrat befestigt sein, so dass der Permanentmagnet ähnlich wie bei einer Zungenfrequenzmesseinrichtung gemäß dem Ausleger-Prinzip ("Cantilever") vibrieren kann.

Der Permanentmagnet kann derart eingerichtet sein, dass seine Magnetisierungsrichtung sich im Wesentlichen orthogonal zu der Oberfläche des Substrats erstreckt. In diesem Falle durchdringen die Magnetfeldlinien, die vorzugsweise in der Substratebene gebildete Induktivität im Wesentlichen senkrecht, so dass bei einer Relativbewegung zwischen Permanentmagnet und Induktivität eine besonders starke Variation des magnetischen Flusses und somit eine besonders hohe Induktionsspannung erhalten werden kann.

Das System aus zumindest einem elastischem Federelement und dem Permanentmagneten kann auf eine vorgebbare Resonanzfrequenz, d.h. eine Vibrationsfrequenz, auf die das System besonders gut anschwingen kann, angepasst sein. Ist beispielsweise a priori bekannt, dass eine Schaltkreis-Anordnung der Erfindung in Kombination mit einem bestimmten Motor betrieben werden soll, welcher typischerweise bei einer bestimmten Frequenz vibriert, so können die Dimensionen, Materialien und Federkonstanten des Systems aus Federelement und Permanentmagnet auf diese vorgegebene Frequenz angepasst werden, so dass ein besonders effektives Anschwingen des mechanischen Vibrationssystems auf die von dem Motor erzeugte Vibration ermöglicht ist. Dadurch kann die mechanische Energie besonders effektiv in elektrische Energie umgewandelt werden.

Vorzugsweise kann eine Mehrzahl von elastischen Federelementen vorgesehen sein, wobei das System aus der Mehrzahl von elastischen Federelementen und dem Permanentmagneten auf mehrere unterschiedliche vorgebbare Resonanzfrequenzen oder mindestens ein vorgebbares Band von Resonanzfrequenzen angepasst ist. Auf diese Weise ist es möglich, dass die erfindungsgemäße Schaltkreis-Anordnung flexibel in unterschiedlichen Frequenzbereichen anregender Vibrationen dazu in der Lage ist, in Anwesenheit einer solchen Vibration selbst in Schwingung zu geraten und somit effektiv Energie zu erzeugen. Insbesondere kann das System auf ein Anschwingen einer Vibration eines Frequenzbands oder einer Mehrzahl unterschiedlicher Frequenzbänder angepasst sein, wodurch eine Energiegewinnung auf Basis ganz unterschiedlicher externer Vibrationen ermöglicht ist.

Der Permanentmagnet kann relativ zu der Induktivität in zwei zueinander orthogonalen Richtungen in der Substratebene beweglich sein. Hierfür können beispielsweise zwei in der Substratebene zueinander im Wesentlichen vertikal orientierte Strukturen aus Induktivität und Permanentmagnet nebeneinander gebildet werden, von denen jede Struktur zum Anschwingen auf eine externe Vibration einer bestimmten Vibrationsrichtung in der Substratebene eingerichtet sein, um eine Energieversorgung der funktionellen Einheit für unterschiedliche Vibrationsrichtungen einer anregenden Vibration zu ermöglichen.

Zwischen dem Substrat einerseits und dem Permanentmagneten und der Induktivität andererseits kann ein Magnetfeldabschirmbereich gebildet sein, der zum Abschirmen des Magnetfeldes des Permanentmagneten in dem Substrat eingerichtet ist. Wenn beispielsweise in dem Substrat die funktionelle Einheit und/oder ein (anderer) Schaltkreis integriert ist und darüber eine oder mehrere Signalebenen vorgesehen sind, so kann ein in der Induktivität fließender Induktionsspannung bzw. das Magnetfeld des Permanentmagneten als Störsignal auch in diese Signalebenen bzw. den in dem Substrat integrierten Schaltkreis unerwünscht eingekoppelt werden. Dies kann vermieden werden, indem zwischen den integrierten Schaltkreis und die Signalebenen einerseits und die Induktivität und den Permanentmagneten andererseits ein Magnetfeldabschirmbereich, beispielsweise eine Schicht aus weichmagnetischem Material wie Eisen, gebildet wird, welche von Permanentmagnet und Induktivität gebildete Magnetfelder vor einem Einkoppeln in die Signalebenen bzw. den integrierten Schaltkreis schützt.

Als permanentmagnetisches Material für den Permanentmagneten kann beispielsweise Eisen, Kobalt, Nickel oder ein permanentmagnetisches Seltene-Erde-Material verwendet werden.

Ausführungsbeispiele der Erfindung sind in den Figuren dargestellt und werden im Weiteren näher erläutert. Es zeigen:
- Figuren 1A, 1B: eine Draufsicht einer monolithisch integrierten Schaltkreis-Anordnung gemäß einem ersten Ausführungsbeispiel der Erfindung in zwei unterschiedlichen Betriebszuständen,
- Figur 2: einen Querschnitt einer monolithisch integrierten Schaltkreis-Anordnung gemäß einem zweiten Ausführungsbeispiel der Erfindung,
- Figur 3: eine Draufsicht einer monolithisch integrierten Schaltkreis-Anordnung gemäß einem dritten Ausführungsbeispiel der Erfindung,
- Figuren 4A bis 4D: Induktivitäten gemäß unterschiedlichen Ausführungsbeispielen der Erfindung zur Verwendung in einer monolithisch integrierten Schaltkreis-Anordnung gemäß der Erfindung,
- Figuren 5A bis 5D: Schichtenfolgen zu unterschiedlichen Zeitpunkten während eines Verfahrens zum Herstellen einer monolithisch integrierten Schaltkreis-Anordnung gemäß einem vierten Ausführungsbeispiel der Erfindung,
- Figuren 6A bis 6C: Schichtenfolgen zu unterschiedlichen Zeitpunkten während eines Verfahrens zum Herstellen einer monolithisch integrierten Schaltkreis-Anordnung gemäß einem fünften Ausführungsbeispiel der Erfindung,
- Figuren 7A bis 7E: Schichtenfolgen zu unterschiedlichen Zeitpunkten während eines Verfahrens zum Herstellen einer monolithisch integrierten Schaltkreis-Anordnung gemäß einem sechsten Ausführungsbeispiel der Erfindung.

Gleiche oder ähnliche Komponenten in unterschiedlichen Figuren sind mit gleichen Bezugsziffern versehen.

Die Darstellungen in den Figuren sind schematisch und nicht maßstäblich.

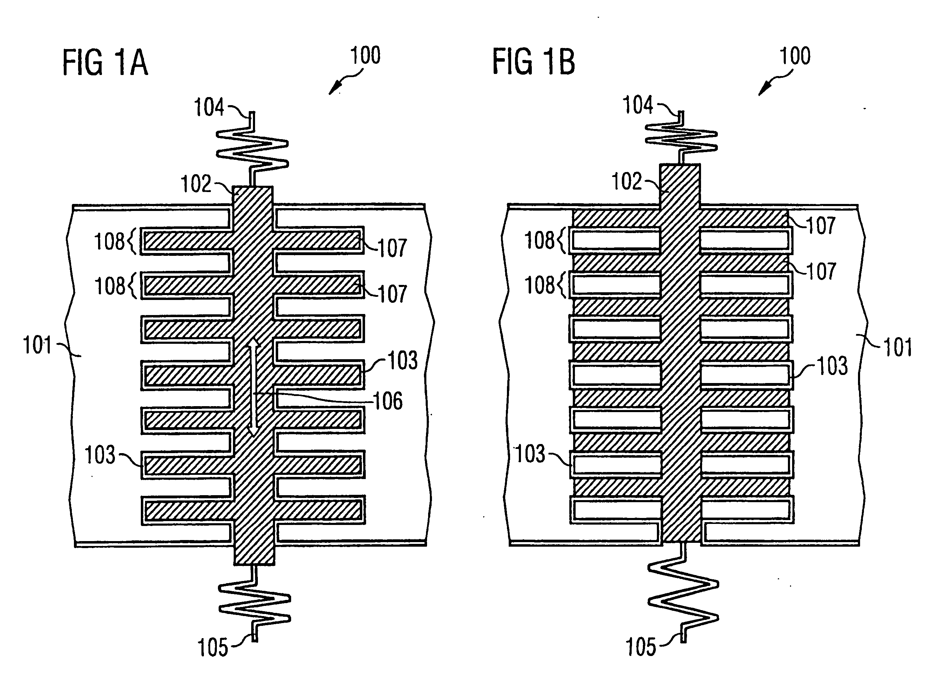

Im Weiteren wird bezugnehmend auf **Fig.1A, Fig.1B** eine Schaltkreis-Anordnung 100 gemäß einem ersten bevorzugten Ausführungsbeispiel der Erfindung beschrieben.

Die Schaltkreis-Anordnung 100, welche in Fig.1A und Fig.1B in Draufsicht in zwei unterschiedlichen Betriebszuständen gezeigt ist, ist in bzw. auf einem Siliziumsubstrat 101 monolithisch integriert. In dem Siliziumsubstrat 100 ist ein Temperatursensor (nicht gezeigt) als funktionelle Einheit zum Bestimmen der Temperatur eines Motors (nicht gezeigt) gebildet, an welchem die Schaltkreis-Anordnung 100 angebracht ist. Die Schaltkreis-Anordnung 100 kann kontaktlos mit einer externen Steuereinheit (nicht gezeigt) kommunizieren. Insbesondere kann die Schaltkreis-Anordnung 100 ein Temperatursignal mittels elektromagnetischer Strahlung an die externe Steuereinheit übermitteln. Auf dem Siliziumsubstrat 101 ist eine Mäanderspule 103 als integrierte Induktivität vorgesehen. Oberhalb der Mäanderspule 103 ist freischwebend eine permanentmagnetische Nickel-Kammstruktur 102 als Permanentmagnet vorgesehen, welcher mittels erster und zweiter Federelemente 104, 105 mit dem Siliziumsubstrat 101 gekuppelt ist. Die Nickel-Kammstruktur 102 und die Mäanderspule 103 bilden gemeinsam eine Energieversorgungseinheit zum Versorgen des.Temperatursensors mit elektrischer Energie, welche aus einer externen Vibration des Motors gewonnen wird. Mittels eines Pfeils 106 ist eine Bewegungsrichtung angegeben, entlang welcher die Nickel-Kammstruktur 102 bewegbar ist, wenn eine externe Vibration des Motors vorliegt.

Die Magnetisierungsrichtung des permanentmagnetischen Materials der Nickel-Kammstruktur 102 ist senkrecht zu der Chipebene bzw. der Papierebene von Fig.1A, Fig.1B, das heißt senkrecht zu der Oberfläche des Siliziumsubstrats 101, orientiert. Die Nickel-Kammstruktur 102 bewegt sich in Anwesenheit einer externen Vibration oberhalb von und relativ zu der Mäanderspule 103. Die Nickel-Kammstruktur 102 weist eine Vielzahl von Kammzähnen 107 auf, deren Dimension auf die Dimension einer Spulenschleife 108 der Mäanderspule 103 angepasst ist. Bei einer Bewegung der Nickel-Kammstruktur 102 in Bewegungsrichtung 106 verändert sich der magnetische Fluss durch die Mäanderspule 103, wodurch ein Induktionsstrom in der Mäanderspule 103 induziert bzw. generiert wird.

Bei einer Auslenkung der Nickel-Kammstruktur 102 aufgrund einer externen Vibration wird mittels des ersten und des zweiten Federelements 104, 105 eine Rückstellkraft auf die Nickel-Kammstruktur 102 ausgeübt. Dadurch schwingt die Nickel-Kammstruktur 102 zwischen zwei Extremstellungen hin und her, wodurch in der Mäanderspule 103 eine elektrische Spannung induziert wird.

Beim Herstellen der Schaltkreis-Anordnung 100 können die Federelemente 104, 105 in demselben Arbeitsschritt wie die Nickel-Kammstruktur 102 ausgebildet werden. Die Herstellung eines solchen Federsystems 104, 105 an sich ist aus der MEMS-Technologie bekannt. Die Federelemente 104, 105 sind auf eine Frequenz einer Vibration angepasst, bei welcher der Motor als Vibrationsquelle typischerweise schwingt. Indem die Resonanzfrequenz der Federelemente 104, 105 somit anschaulich in Übereinstimmung mit einer zu erwartenden äußeren Anregung gebracht ist, ist eine besonders effektive Energieerzeugung möglich.

In Fig.1A ist die Schaltkreis-Anordnung 100 in einem ersten Betriebszustand gezeigt, in welchem die Nickel-Kammstruktur 102 in dem Nulldurchgang gezeigt sind. Somit sind die ersten und zweiten Federelemente 104, 105 in diesem Betriebszustand nicht ausgelenkt. Bei dem Nulldurchgang ist, wie mit dem Pfeil 106 angedeutet, eine hohe Durchgangsgeschwindigkeit der Nickel-Kammstruktur 102 durch ihre Ruhelage gegeben.

In einem zweiten Betriebszustand der monolithisch integrierten Schaltkreis-Anordnung 100, der in Fig.1B gezeigt ist, ist die Nickel-Kammstruktur 102 maximal, in gemäß Fig.1B oberer Richtung ausgelenkt, so dass ein Umkehrpunkt der Schwingung der Nickel-Kammstruktur 102 erreicht ist. Das erste Federelement 104 ist stark komprimiert und das zweite Federelement 105 ist stark gedehnt. An dem Umkehrpunkt üben beide Federelemente 104, 105 auf die Nickel-Kammstruktur 102 eine rücktreibende Kraft aus, die eine Bewegung der Nickel-Kammstruktur 102 gemäß Fig.1B nach unten zur Folge hat.

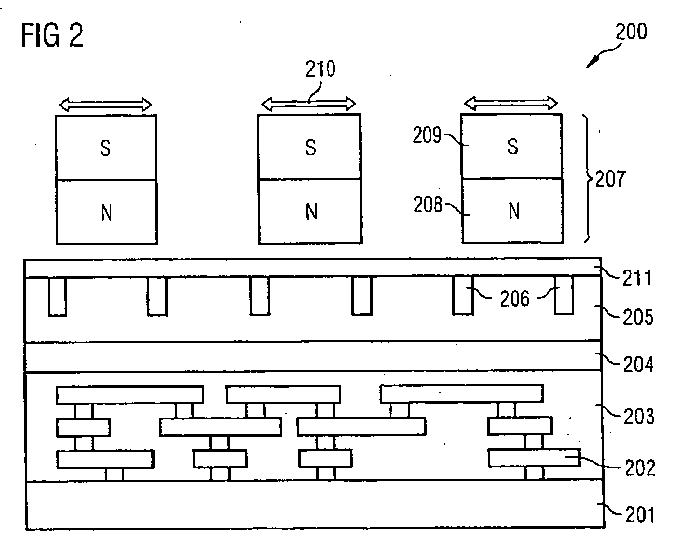

Im Weiteren wird bezugnehmend auf **Fig.2** eine Schaltkreis-Anordnung 200 gemäß einem zweiten Ausführungsbeispiel der Erfindung beschrieben.

Die Schaltkreis-Anordnung 200 weist ein Siliziumsubstrat 201 auf, in welchem ein integrierter Schaltkreis (nicht gezeigt) ausgebildet ist, der die funktionelle Einheit der Schaltkreis-Anordnung 200 bildet. Oberhalb des Siliziumsubstrats 201 ist eine Signalebene gebildet, welche Leiterbahnen 202 aus Aluminium- oder Kupfer-Material aufweisen, welche in einem Isolations-Bereich 203 (z.B. aus Siliziumoxid, SiO₂, bzw. aus einem Low-k-Material) eingebettet sind. Auf der Signalebene ist eine Weichmagnet-Schicht 204 aus einem weichmagnetischen Material gebildet. Auf der Weichmagnet-Schicht 204 ist, eingebettet in eine Siliziumoxid-Schicht 205, eine Mäanderspule 206 aus Aluminium oder Kupfer-Material ausgebildet, welche als Induktivität einer Energieversorgungseinheit der Schaltkreis-Anordnung 200 zum Versorgen des integrierten Schaltkreises in dem Siliziumsubstrat 201 mit elektrischer Betriebsenergie dient. Die Spule 206 kann optional mit einer Schutzschicht 211 (z.B. aus Siliziumnitrid-Material, Si₃N₄) bedeckt sein, was beispielsweise zum Freiätzen einer Kammstruktur als Permanentmagnet wichtig sein kann. Oberhalb der Mäanderspule 206, mit dem Substrat mittels eines Federelements (nicht gezeigt) gekoppelt, ist ein Kobalt-Permanentmagnet 207, welcher eine Kammstruktur aufweist, von der in Fig.2 drei Zähne zu sehen sind. Schematisch ist jeder der Zähne mit einem Nordpol 208 und einem Südpol 209 gezeigt. Die Magnetfeldrichtung des Kobalt-Permanentmagneten 207 erstreckt sich in gemäß Fig.2 vertikaler Richtung. Mittels Bewegensrichtung 210 ist angedeutet, wie sich der Kobalt-Permanentmagnet 207 in Anwesenheit einer externen Vibration bewegt. Dadurch ändert sich der magnetische Fluss durch die Mäanderspule 206, wodurch in der Mäanderspule 206 eine Induktionsspannung bzw. ein Induktionsstrom generiert wird. Dieser wird zum Versorgen der funktionellen Einheit in dem Siliziumsubstrat 201 mit elektrischer Energie verwendet.

Das zeitlich veränderliche Magnetfeld aufgrund der Vibration des Kobalt-Permanentmagneten 207 erzeugt in den Leiterschleifen der Mäanderspule 206 einen elektrischen Strom. Die Anwesenheit eines solchen Magnetfeldes in den Verdrahtungsebenen 202 für die Logik auf dem Siliziumchip 201, das heißt insbesondere im Bereich der Leiterbahnen 202, ist jedoch unerwünscht, da ein solches Magnetfeld in den signalführenden Leiterbahnen 202 ein Störsignal darstellt. Um dieses Problem zu beheben, ist bei der Schaltkreis-Anordnung 200 eine Abschirmebene, das heißt die Weichmagnetschicht 204 aus einem weichmagnetischen Material, in der Schaltkreis-Anordnung 200 integriert. Die Weichmagnetschicht 204 ist zwischen den Signalebenen 202 und der Mäanderspule 206 angeordnet. Somit sind die Leiterbahnen 202 sowie integrierte Bauelemente in dem Siliziumsubstrat 201 vor einem unerwünschten veränderlichen Magnetfeld sicher geschützt.

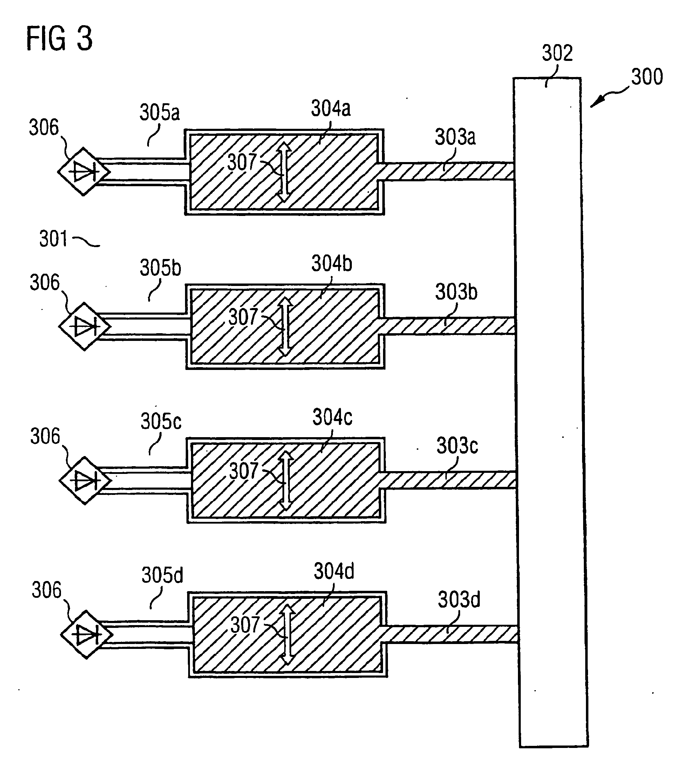

Im Weiteren wird bezugnehmend auf **Fig.3** eine Schaltkreis-Anordnung 300 gemäß einem dritten Ausführungsbeispiel der Erfindung beschrieben.

Die Schaltkreis-Anordnung 300 ist auf und in einem Siliziumchip 301 integriert. Mittels eines Halteelements 302, welches z.B. aus Siliziumoxid-Material auf einem Oberflächenbereich des Siliziumchips 301 quaderförmig gebildet ist, sind vier Strukturen gemäß dem Ausleger-Typ freischwebend gehalten. Das Halteelement 302 kann auch aus magnetischem, insbesondere permanentmagnetischem Material gebildet sein, welches aber nicht freischwebend ausgebildet ist, sondern an dem Siliziumchip 301 befestigt ist. In der Regel ist das Halteelement 302 breiter, vorzugsweise wesentlich breiter, als die beweglichen Komponenten 303a bis 303d, 304a bis 304d. Jede der Strukturen ist aus einem mit dem Halteelement 302 gekuppelten Federelement 303a bis 303d und aus einer mit dem jeweiligen Federelement 303a bis 303d gekuppelten permanentmagnetischen Eisen-Zunge 304a bis 304d als Permanentmagnet einer Energieversorgungseinheit gebildet. In Anwesenheit einer externen Vibration kann mindestens eine jeweilige der Strukturen 303a+304a, 303b+304b, 303c+304c, 303d+304d in Schwingung gebracht werden. Ferner sind auf dem Siliziumchip 301 erste bis vierte Schleifen 305a bis 305d als Induktivität einer Energieversorgungseinheit der Schaltkreis-Anordnung 300 gebildet.

Wie im Weiteren beschrieben wird, kann in jeder der Schleifen 305a bis 305d eine Induktionsspannung generiert werden, welche mittels eines jeweiligen Gleichrichters 306 zwischen den jeweiligen Schleifenenden gleichgerichtet werden kann, so dass ein Sensor als funktionelle Einheit der Schaltkreis-Anordnung 300 mit einem elektrischen Gleichstrom versorgt werden kann.

An dem Halteelement 302, welches sich vertikal zu dem Siliziumchip 301 erstreckt, sind die freischwebenden Anordnungen vorgesehen, die jeweils aus einem der sich ausgehend von dem Halteelement 302 erstreckenden Federelementstreifen 303a bis 303d und einer der an dem freien Endabschnitt eines jeweiligen Federelementstreifens 303a bis 303d angebrachten ersten bis vierten Eisen-Zunge 304a bis 304d als Permanentmagnet gebildet sind. Wie mittels Pfeile 307 angedeutet ist, kann bei einer anregenden externen Vibration eine oder mehrere der Anordnungen aus einem Federelement 303a bis 303d und einer zugehörigen Eisen-Zunge 304a bis 304d vibrieren.

Bei der Schaltkreis-Anordnung 300 ist das permanentmagnetische Material der Energieversorgungseinheit nicht, wie in Fig.1, in Form einer Kammstruktur, sondern als voneinander separat vorgesehene Eisen-Zungen 304a bis 304d vorgesehen. Jede der Zungen 304a bis 304d schwingt über einer zugehörigen Mäanderschleife 305a bis 305d. Die ersten bis vierten Federelemente 303a bis 303d sind als verschmälerter Teil der zugehörigen Eisen-Zunge 304a bis 304d ausgeführt, welche Federelemente 303a bis 303d seitlich an dem Halteelement 302 befestigt sind.

Bei der Schaltkreis-Anordnung 300 sind die Zungen 304a bis 304d und die zugehörigen Federelemente 303a bis 303d jeweils so ausgeführt, dass jede der Anordnungen 303a und 304a, 303b und 304b, 303c und 304c sowie 303d und 304d bei einer vorgegebenen Frequenz einer anregenden externen Schwingung optimal (d.h. in Resonanz) anschwingen können. Somit kann ein breites Frequenzband anregender Schwingungen mit der Schaltkreis-Anordnung 300 abgedeckt werden, wobei bei einer externen Vibration einer bestimmten Vibrationsfrequenz eine oder mehrere der Zungen 304a bis 304d samt der Federelemente 303a bis 303d in Resonanz schwingt/schwingen. Da nicht notwendigerweise alle Zungen 304a bis 304d mit einer festen Phasenbeziehung zueinander schwingen müssen, ist für jede Leiterschleife 305a bis 305d ein separater Gleichrichter 306 vorgesehen.

Anschaulich hat jede der Zungen 304a bis 304d einen dünnen Fortsatz, der als Federelement 303a bis 303d dient. Mittels Anpassens der Geometrie von Zunge 304a bis 304d und Feder 303a bis 303d kann die jeweilige Resonanzfrequenz einer Zunge-Feder-Kombination eingestellt werden. Die Leiterschleifen 305a bis 305d unterhalb der Zungen 304a bis 304d kann alternativ auch als Spiralinduktor oder Ähnliches ausgeführt werden.

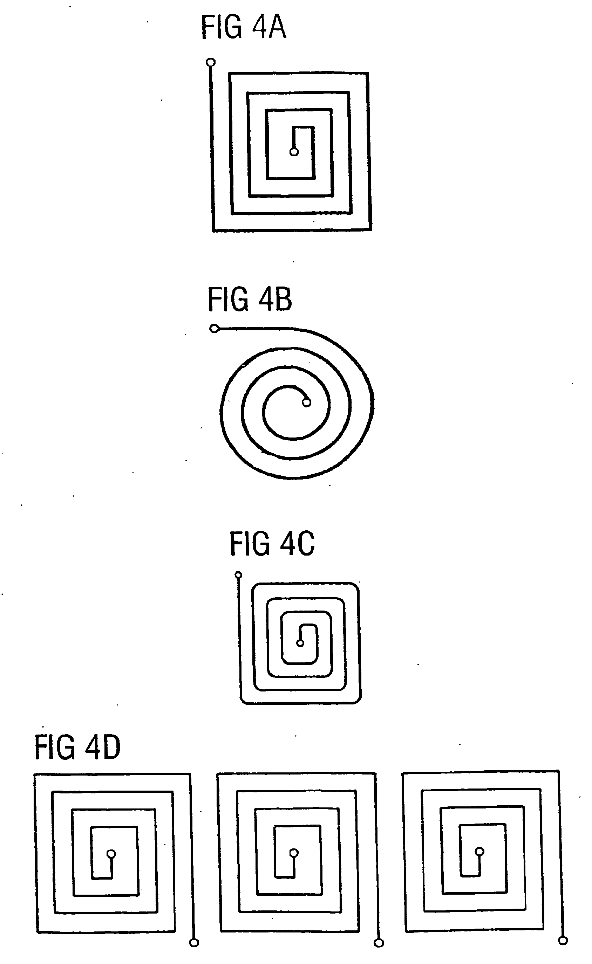

In Fig.4A bis Fig.4D sind unterschiedliche Ausführungsformen für die Induktivitäten der erfindungsgemäßen Schaltkreis-Anordnung gezeigt.

Bei der in **Fig.4A** gezeigten Spule handelt es sich um einen Spiralinduktor, bei dem mehrere im Wesentlichen rechteckförmig gebildete Windungen ineinander vorgesehen sind.

Der Spiralinduktor aus **Fig.4B** ist aus im Wesentlichen kreisförmigen und konzentrischen Windungen mit von innen nach außen zunehmendem Radius gebildet.

Der Spiralinduktor aus **Fig.4C** unterscheidet sich von dem Spiralinduktor aus Fig.4A dadurch, dass er Leiterbahnen mit abgerundeten Kanten aufweist.

In **Fig.4D** ist eine Induktivität gezeigt, bei der drei der in Fig.4A gezeigten Spiralinduktoren gemeinsam verschaltet sind. Es können mehrere der in Fig.4A, Fig.4B und Fig.4C gezeigten Induktoren in beliebiger Kombination miteinander zusammengeschaltet werden, um besonders effektiv elektrische Energie aus einem vibrierenden Permanentmagneten gewinnen zu können. Solche Induktoren können nebeneinander und/oder übereinander (das heißt auch in zwei Dimensionen in der Substratebene) angeordnet werden, und auch in einer dritten Dimension (das heißt mehrere Spiralinduktorebenen senkrecht zu der Zeichenebene von Fig.4D).

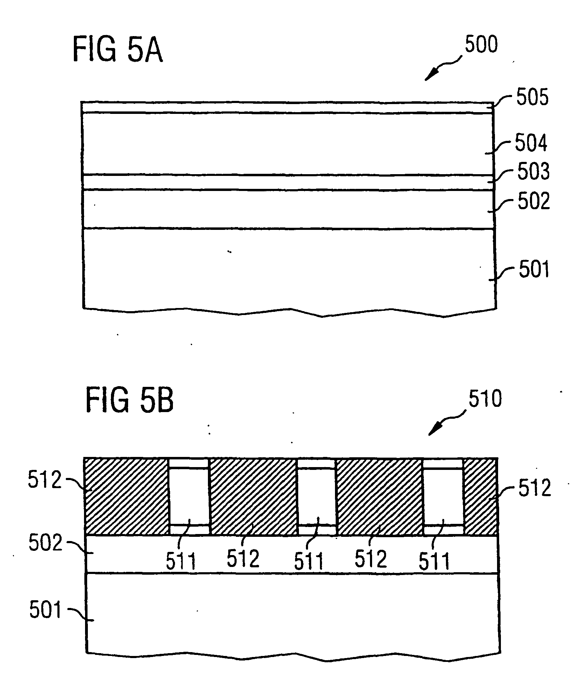

Im Weiteren werden bezugnehmend auf Fig.5A bis Fig.5D Schichtenfolgen zu unterschiedlichen Zeitpunkten während eines Verfahrens zum Herstellen einer monolithisch integrierten Schaltkreis-Anordnung gemäß einem vierten Ausführungsbeispiel der Erfindung beschrieben.

Um die in **Fig.5A** gezeigte Schichtenfolge 500 zu erhalten, wird auf einem Siliziumsubstrat 501 eine Siliziumoxid-Schicht 502 mit einer Dicke von ungefähr 100 Nanometer gebildet. Auf der Siliziumoxid-Schicht 502 wird eine Titannitrid-Schicht 503 mit einer Dicke von ungefähr 10 Nanometer bis 100 Nanometer abgeschieden. Auf der so erhaltenen Schichtenfolge wird eine Aluminium-Schicht 504, die beispielsweise eine Dicke von ungefähr 100 Nanometer bis 1000 Nanometer aufweisen kann, abgeschieden. Auf der Aluminium-Schicht 504 wird eine zusätzliche Titannitrid-Schicht 505 mit einer Dicke von ungefähr 10 Nanometer bis 100 Nanometer abgeschieden.

Um die in **Fig.5B** gezeigte Schichtenfolge 510 zu erhalten, werden die Titannitrid-Schicht 503, die Aluminium-Schicht 504 und die zusätzliche Titannitrid-Schicht 505 der Schichtenfolge 510 unter Verwendung eines Lithographie- und eines Ätzverfahrens derart strukturiert, dass dadurch eine integrierte Mäanderspule 511 generiert wird. Auf der strukturierten Schichtenfolge wird Siliziumnitrid-Material (alternativ Siliziumoxid-Material bzw. ein Low-k-Material) abgeschieden und unter Verwendung eines CMP-Verfahrens ("chemical mechanical polishing") planarisiert. Dadurch wird ein Siliziumnitrid-Bereich 512 gebildet, in welchem die Mäanderspule 511 eingebettet ist. Soll eine Mäanderspule 511 auf der Basis von Kupfer-Material statt Aluminium-Material gebildet werden, so kann dies unter Verwendung eines Damascene-Verfahrens realisiert werden.

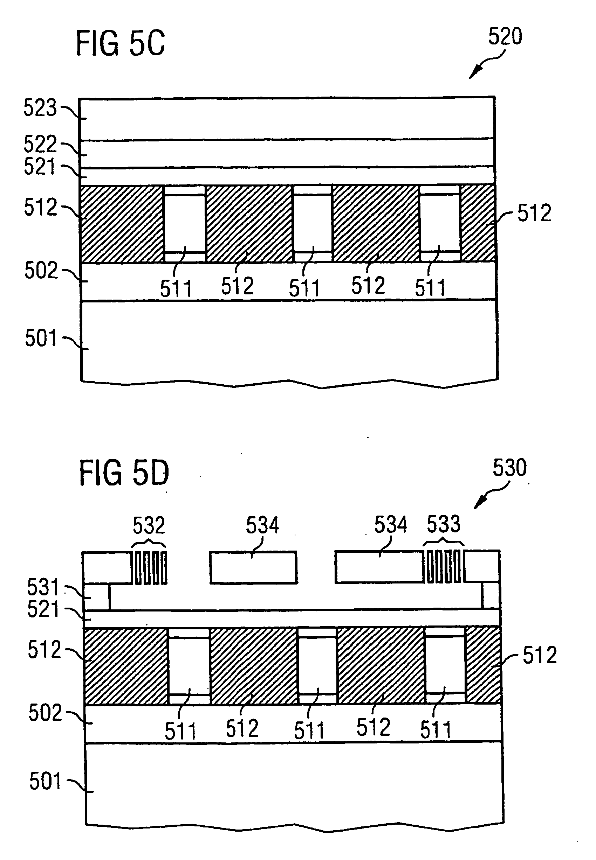

Um die in **Fig.5C** gezeigte Schichtenfolge 520 zu erhalten, wird auf der Oberfläche der Schichtenfolge 510 zunächst eine Ätzstoppschicht 521 aus Siliziumnitrid-Material abgeschieden, auf der Ätzstoppschicht 521 wird eine Opferschicht 522 aus Siliziumoxidmaterial abgeschieden, und auf der Opferschicht 522 wird eine Magnetschicht 523 aus ferromagnetischem Eisen-Material abgeschieden. Die gemäß Fig.5C vertikale Ausdehnung der Magnetschicht 523 ist ungefähr 200 Nanometer.

Um die in **Fig.5D** gezeigte Schaltkreis-Anordnung 530 gemäß einem vierten Ausführungsbeispiel der Erfindung zu erhalten, wird zunächst unter Verwendung eines Lithographie- und eines Ätzverfahrens die Magnetschicht 523 derart strukturiert, dass erste und zweite Federelemente 532, 533 gebildet werden, zwischen denen ein in einem zentralen Bereich der strukturierten Magnetschicht 523 gebildete Eisen-Kammstruktur 534 angeordnet wird. Um die Eisen-Kammstruktur 534 freischwebend zu realisieren, wird nachfolgend unter Verwendung eines selektiven Ätzverfahrens die Opferschicht 522 unterhalb des Bereichs der ersten und zweiten Federelemente 532, 533 und der Eisen-Kammstruktur 534 entfernt, so dass lediglich in Randbereichen der Schaltkreis-Anordnung 530 Material der Opferschicht 522 als Abstandshalter 531 zum Aufrechterhalten eines vertikalen Abstands zwischen der Ätzstoppschicht 521 und den darüber angeordneten Komponenten der Magnetschicht 523 zurück bleibt. Bei diesem Ätzverfahren dient die.Ätzstoppschicht 521 zum Stoppen des selektiven Ätzverfahrens, bei dem im Wesentlichen nur das Material der Opferschicht 522, nicht hingegen das Material der Ätzstoppschicht 521 geätzt wird.

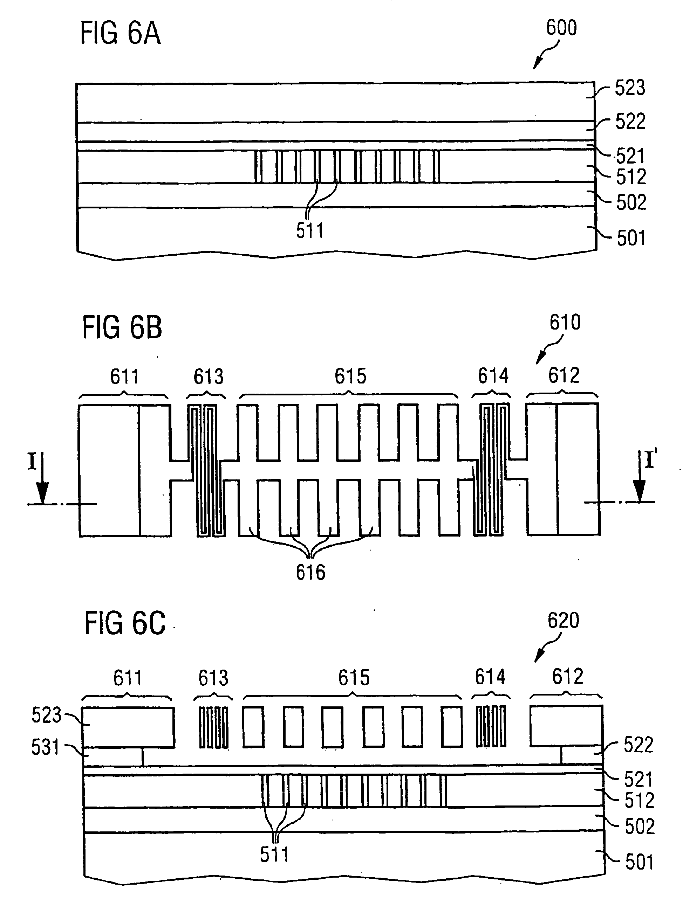

Im Weiteren wird bezugnehmend auf Fig.6A bis Fig.6C ein Verfahren zum Herstellen einer Schaltkreis-Anordnung gemäß einem fünften Ausführungsbeispiel der Erfindung beschrieben.

Die in **Fig.6A** gezeigte Schichtenfolge 600 entspricht im Wesentlichen der in Fig.5C gezeigten Schichtenfolge 520. Allerdings sind bei der Schichtenfolge 600 mehr Einzelkomponenten, das heißt Spulenwindungen der Mäanderspule 511 vorgesehen als gemäß Fig.5C.

Im Weiteren wird bezugnehmend auf **Fig.6B, Fig.6C** eine Schaltkreis-Anordnung gemäß dem fünften Ausführungsbeispiel der Erfindung beschrieben. Fig.6B zeigt eine Draufsicht 610 der Schaltkreis-Anordnung, wohingegen Fig.6C eine Querschnittsansicht 620 der Schaltkreis-Anordnung zeigt, aufgenommen entlang einer in Fig.6B gezeigten Schnittlinie I-I'.

Um die in Fig.6B, Fig.6C gezeigte Schaltkreis-Anordnung zu erhalten, wird unter Verwendung eines Lithographie- und eines Ätzverfahrens die Magnetschicht 523 der Schichtenfolge 600 derart strukturiert, dass an gemäß Fig.6B, Fig.6C linken und rechten Randbereichen der strukturierten Magnetschicht 523 erste und zweite Haltebereiche 611, 612 gebildet sind. In einem zentralen Bereich der strukturierten Magnetschicht 523 ist eine Eisen-Kammstruktur 615 mit einer Mehrzahl von Zähnen 616 gebildet. Zwischen dem ersten Haltebereich 611 und einem gemäß Fig.6B, Fig.6C linken Abschnitt der Eisen-Kammstruktur 615 ist ein erstes Federelement 613 gebildet. Zwischen dem gemäß Fig.6B, Fig.6C rechten Abschnitt der Eisen-Kammstruktur 615 und dem zweiten Haltebereich 612 ist ein zweites Federelement 614 gebildet. Nach dem Strukturieren der Magnetschicht 523 wird unter Verwendung eines isotropen Ätzverfahrens Material der Opferschicht 522 entfernt, so dass lediglich in gemäß Fig.6C linken und rechten Teilbereichen der Schaltkreis-Anordnung zwischen der Ätzstoppschicht 521 und der Magnetschicht 523 Abstandshalter 531 zurückbleiben.

Soll als Material für die Mäanderspule bei der erfindungsgemäßen Schaltkreis-Anordnung Kupfer verwendet werden, so wird die Mäanderspule vorzugsweise gemäß einem Damascene-Verfahren ausgebildet.

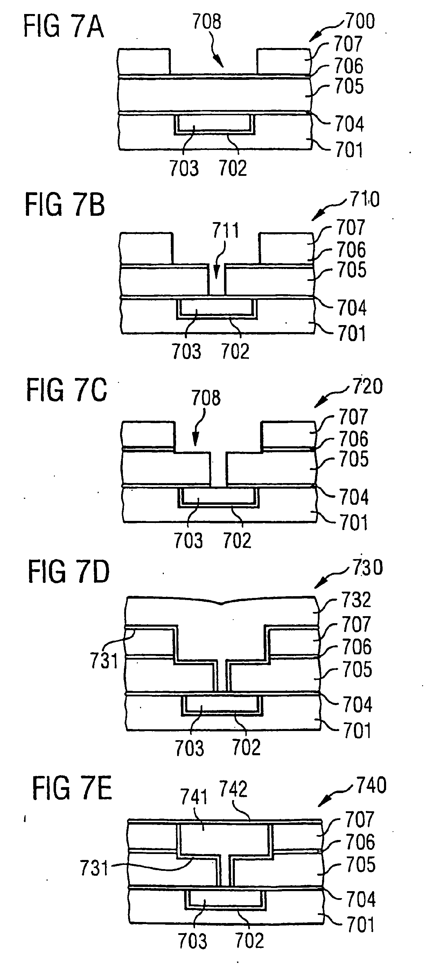

Im Weiteren werden bezugnehmend auf Fig.7A bis Fig.7E Schichtenfolgen zu unterschiedlichen Zeitpunkten während eines Verfahrens zum Herstellen einer Schaltkreis-Anordnung gemäß einem sechsten Ausführungsbeispiel der Erfindung beschrieben, bei der Mäanderspule aus Kupfer-Material gebildet ist.

Um die in **Fig.7A** gezeigte Schichtenfolge 700 zu erhalten, wird eine erste Siliziumoxid-Schicht 701 unter Verwendung eines Lithographie- und eines Ätzverfahrens strukturiert, und in so gebildeten Gräben ein Barrierenbereich 702 gebildet. Nachfolgend wird der Graben oder werden die Gräben mit Kupfermaterial gefüllt, so dass nach einem Planarisierungsverfahren (z.B. CMP-Verfahren, "Chemical Mechanical Polishing") ein erster Kupferbereich 703 gebildet wird. Auf der so erhaltenen Schichtenfolge wird Siliziumnitrid-Material abgeschieden, wodurch eine erste Siliziumnitrid-Ätzstoppschicht 704 gebildet wird. Auf der so erhaltenen Schichtenfolge wird eine zweite Siliziumoxid-Schicht 705 gebildet. Auf der so erhaltenen Schichtenfolge wird eine zweite Siliziumnitrid-Ätzstoppschicht 706 gebildet. Auf der zweiten Siliziumnitrid-Ätzstoppschicht 706 wird eine zusätzliche Siliziumoxid-Schicht abgeschieden und unter Verwendung eines Lithographie- und eines Ätzverfahrens zu einem Siliziumoxid-Bereich 707 strukturiert, in welchen ein Graben 708 eingebracht ist.

Um die in **Fig.7B** gezeigte Schichtenfolge 710 zu erhalten, wird unter Verwendung eines Lithographie- und eines Ätzverfahrens ein zusätzlicher Graben 711 in die zweite Siliziumoxid-Schicht 705 und die zweite Siliziumnitrid-Ätzstoppschicht 706 eingebracht. Der zusätzliche Graben 711 dient als Via-Öffnung. Bei dem Ätzen der zweiten Siliziumoxid-Schicht 705 dient die erste Siliziumnitrid-Ätzstoppschicht 704 zum Stoppen des Ätzvorgangs. Nachfolgend kann eine zum Strukturieren gebildete Photomaske (nicht gezeigt) beispielsweise unter Verwendung eines Sauerstoffplasmaverfahrens entfernt werden. Während des Entfernens des Photoresists ist der erste Kupferbereich 703 mittels der ersten Siliziumnitrid-Ätzstoppschicht 704 vor einer negativen Beeinflussung durch das Sauerstoffplasma geschützt.

Um die in **Fig.7C** gezeigte Schichtenfolge 720 zu erhalten, wird die Schichtenfolge 710 einem selektiven Ätzverfahren zum Entfernen von freiliegendem Siliziumnitrid-Material unterzogen, so dass freiliegendes Siliziumnitrid-Material der ersten und zweiten Siliziumnitrid-Ätzstoppschichten 704, 706 entfernt wird. Dadurch wird Kupfer-Material des ersten Kupferbereichs 703 freigelegt. Aufgrund eines Überätzens erstreckt sich der Graben 708 nunmehr leicht in die zweite Siliziumoxid-Schicht 705 hinein.

Um die in **Fig.7D** gezeigte Schichtenfolge 730 zu erhalten, wird unter Verwendung eines Sputterverfahrens Material zum Bilden einer Barrierenschicht 731 auf die Schichtenfolge 720 aufgebracht. Ferner wird in einem zweistufigen Prozess ein zweiter Kupferbereich 732 ganzflächig auf der Barrierenschicht 731 aufgebracht. Hierfür wird zunächst eine dünne Keimschicht unter Verwendung eines Sputterverfahrens abgeschieden, gefolgt von einem Abscheiden von zusätzlichem Kupfer zum Bilden des zweiten Kupferbereichs 732 unter Verwendung eines Electroplating-Verfahrens.

Um die in **Fig.7E** gezeigte Schichtenfolge 740 zu erhalten, wird unter Verwendung eines CMP-Verfahrens ("Chemical Mechanical Polishing") über die Barrierenschicht 731 vertikal überstehendes Material des zweiten Kupferbereichs 732 entfernt, wodurch ein dritter Kupferbereich 741 gebildet wird. Ferner wird auf der Oberfläche der so erhaltenen Schichtenfolge Siliziumnitrid-Material abgeschieden, wodurch eine Schutzschicht 742 erhalten wird.

Zumindest ein Teil der Kupferstruktur, die aus ersten und dritten Kupferbereichen 703, 741 gebildet ist, kann beispielsweise als Mäanderspule bzw. eine Windung der Mäanderspule verwendet werden.

In diesem Dokument sind folgende Veröffentlichungen zitiert:
[1] Li, WJ et al. "A Micromachined Vibration-Induced Power Generator for Low Power Sensors of Robotic Systems", In: Jamshidi, M et al. (eds.) "Robotic and Manufacturing Systems, Recent Results in Research, Development and Applications", Vol.10, S.482-488, TSI Press Series, Albuquerque, USA
[2] US 6,475,639 B2
[3] Ching, NNH et al., "A laser-micromachined multi-modal resonating power transducer for wireless sensing systems", In: Sensors ans Actuators A, Vol.97-98, Apr. 2002, S. 685-690
[4]US 4,857,893
[5] Ahn, CH et al., "A Fully Integrated Micromagnetic Actuator with a Multilevel Meander Magnetic Core", In: Technical Digest, IEEE Solid-State Sensor and Actuator Workshop, Hilton Head Island SC, Jun. 1992
[6] Williams, CB et al., " Development of an Electromagnetic Micro-Generator", In: Proceedings- Circuits, Devices ans Systems, Vol. 148, Nr. 6, Dez. 2001, S.337-342
[7] El-hami, M et al., "Design and Fabrication of a New Vibration-Based Electromagnetic Power Generator", In: Sensors ans Actuators A, Vol. 92, Nr. 1-3, Aug. 2001, S.335-342
[8] Li, WJ et al., "Infrared Signal Transmission by a Laser-Micromachined Vibration-Induced Power Generator", In: Proceedings 43rd IEEE Midwest Symposium on Circuits and Systems, Lansing MI, Aug. 8-11, 2000, S. 236-239
[9] Meninger, S. et al., "Vibration-to-Electric Energy Conversion", In: Proceedings 1999 International Symposium on Low Power Electronics and Design (ISLPED), San Diego, Aug. 16-17, 1999, S. 48-53
[10] Liakopoulos, T.M. et al., "Micromachined Thick Permanent Magnet Arrays on Silicon Wafers", In: IEEE Transactions on Magnetics, Nr. 5, Sept. 1996, S. 5154-5156

### Bezugszeichenliste

- 100: Schaltkreis-Anordnung
- 101: Siliziumsubstrat
- 102: Nickel-Kammstruktur
- 103: Mänderspule
- 104: erstes Federelement
- 105: zweite Federelement
- 106: Bewegungsrichtung
- 107: Kammzähne
- 108: Spulenschleife
- 200: Schaltkreis-Anordnung
- 201: Siliziumsubstrat
- 202: Leiterbahnen
- 203: Isolations-Bereich
- 204: Weichmagnet-Schicht
- 205: Siliziumoxid-Schicht
- 206: Mäanderspule
- 207: Kobalt-Permanentmagnet
- 208: Nordpol
- 209: Südpol
- 210: Bewegungsrichtung
- 211: Schutzschicht
- 300: Schaltkreis-Anordnung
- 301: Siliziumchip
- 302: Halteelement
- 303a: erstes Federelement
- 303b: zweites Federelement
- 303c: drittes Federelement
- 303d: viertes Federelement
- 304a: erste Eisen-Zunge
- 304b: zweite Eisen-Zunge
- 304c: dritte Eisen-Zunge
- 304d: vierte Eisen-Zunge
- 305a: erste Schleife
- 305b: zweite Schleife
- 305c: dritte Schleife
- 305d: vierte Schleife
- 306: Gleichrichter
- 307: Pfeile
- 500: Schichtenfolge
- 501: Siliziumsubstrat
- 502: Siliziumoxid-Schicht
- 503: Titannitrid-Schicht
- 504: Aluminium-Schicht
- 505: zusätzliche Titannitrid-Schicht
- 510: Schichtenfolge
- 511: Mäanderspule
- 512: Siliziumnitrid-Bereich
- 520: Schichtenfolge
- 521: Ätzstoppschicht
- 522: Opferschicht
- 523: Magnetschicht
- 530: Schaltkreis-Anordnung
- 531: Abstandshalter
- 532: erster Federelement
- 533: zweites Federelement
- 534: Eisen-Kammstruktur
- 600: Schichtenfolge
- 610: Draufsicht Schaltkreis-Anordnung
- 611: erster Haltebereich
- 612: zweiter Haltebereich
- 613: erster Federelement
- 614: zweites Federelement
- 615: Eisen-Kammstruktur
- 616: Zähne
- 620: Querschnittsansicht Schaltkreis-Anordnung
- 700: Schichtenfolge
- 701: erste Siliziumoxid-Schicht
- 702: Barrierenbereich
- 703: erster Kupferbereich
- 704: erste Siliziumnitrid-Ätzstoppschicht
- 705: zweite Siliziumoxid-Schicht
- 706: zweite Siliziumnitrid-Ätzstoppschicht
- 707: Siliziumoxid-Bereich
- 708: Graben
- 710: Schichtenfolge
- 711: zusätzlicher Graben
- 720: Schichtenfolge
- 730: Schichtenfolge
- 731: Barrierenschicht
- 732: zweiter Kupferbereich
- 740: Schichtenfolge
- 741: dritter Kupferbereich
- 742: Schutzschicht

## Patentansprüche

1. Monolithisch integrierte Schaltkreis-Anordnung(100; 200; 300)
• mit einem Substrat (101; 201; 301);
• mit einer in und/oder auf dem Substrat (101; 201; 301) gebildeten funktionellen Einheit;
• mit einer in und/oder auf dem Substrat (101; 201; 301) gebildeten und mit der funktionellen Einheit gekoppelten Energieversorgungseinheit, die eine Induktivität (103; 206; 305a bis 305d) und einen Permanentmagneten (102, 107; 207; 304a bis 304d) aufweist, die derart eingerichtet sind, dass unter Einwirken einer Vibration auf die Schaltkreis-Anordnung (100; 200; 300) der Permanentmagnet (102, 107; 207; 304a bis 304d) relativ zu der Induktivität (103; 206; 305a bis 305d) parallel zur Substratebene beweglich ist, so dass mittels der Induktivität (103; 206; 305a bis 305d) eine elektrische Induktionsspannung zum autonomen Versorgen der funktionellen Einheit mit elektrischer Energie induzierbar ist und wobei der Permanentmagnet (102, 107; 207; 304a bis 304d) eine oder eine Mehrzahl von Kammstrukturen (102, 107; 207) oder eine Mehrzahl von Zungenstrukturen (304a bis 304d) aufweist.

2. Monolithisch integrierte Schaltkreis-Anordnung (100; 200; 300) nach Anspruch 1,
bei der das Substrat (101; 201; 301) ein Halbleitersubstrat ist.

3. Monolithisch integrierte Schaltkreis-Anordnung (100; 200; 300) nach Anspruch 1 oder 2,
bei der die funktionelle Einheit ein Sensor ist.

4. Monolithisch integrierte Schaltkreis-Anordnung (100; 200; 300) nach Anspruch 3,
bei welcher der Sensor
• ein Drehzahlsensor;
• ein Temperatursensor;
• ein Drucksensor;
• ein chemischer Sensor;
• ein Gassensor;
• ein Biosensor;
• ein Strahlungssensor; und/oder
• ein Sensor zum Erfassen einer Vibrationsfrequenz
ist.

5. Monolithisch integrierte Schaltkreis-Anordnung (100; 200; 300) nach einem der Ansprüche 1 bis 4,
die zum Anbringen an einer Vibrationsquelle eingerichtet ist.

6. Monolithisch integrierte Schaltkreis-Anordnung (100; 200; 300) nach Anspruch 5,
bei der die Vibrationsquelle einen Motor aufweist.

7. Monolithisch integrierte Schaltkreis-Anordnung (100; 200; 300) nach einem der Ansprüche 1 bis 6,
die eine Kommunikationsschnittstelle zum kontaktlosen Kommunizieren mit einer externen Steuereinheit aufweist.

8. Monolithisch integrierte Schaltkreis-Anordnung (100; 200; 300) nach einem der Ansprüche 1 bis 7,
bei der die Energieversorgungseinheit eine Gleichrichtereinrichtung (306) zum Gleichrichten einer Induktionsspannung der Induktivität (103; 206; 305a bis 305d) aufweist, zum Versorgen der funktionellen Einheit mit einer Gleichspannung.

9. Monolithisch integrierte Schaltkreis-Anordnung (100; 200; 300) nach einem der Ansprüche 1 bis 8,
bei der die Energieversorgungseinheit eine Energiespeichereinheit aufweist, in der mittels der Induktionsspannung generierte elektrische Ladungsträger zwischenspeicherbar sind.

10. Monolithisch integrierte Schaltkreis-Anordnung (100; 200; 300) nach Anspruch 9,
bei der die Energiespeichereinheit aus einer Kapazität gebildet ist.

11. Monolithisch integrierte Schaltkreis-Anordnung (100; 200; 300) nach einem der Ansprüche 1 bis 10,
bei der die Induktivität (103; 206; 305a bis 305d) eine elektrisch leitfähige Mäanderstruktur (103; 206) ist.

12. Monolithisch integrierte Schaltkreis-Anordnung (100; 200; 300) nach einem der Ansprüche 1 bis 10,
bei der die Induktivität (103; 206; 305a bis 305d) eine Anordnung aus einer Mehrzahl von elektrisch leitfähigen und in der Substratebene nebeneinander, ineinander und/oder zu der Substratebene vertikal übereinander gebildeten Mäanderstrukturen (103; 206) ist.

13. Monolithisch integrierte Schaltkreis-Anordnung (100; 200; 300) nach einem der Ansprüche 1 bis 10,
bei der die Induktivität (103; 206; 305a bis 305d) eine elektrisch leitfähige Spiralstruktur (305a bis 305d) ist.

14. Monolithisch integrierte Schaltkreis-Anordnung (100; 200; 300) nach einem der Ansprüche 1 bis 10,
bei der die Induktivität (103; 206; 305a bis 305d) eine Anordnung aus einer Mehrzahl von elektrisch leitfähigen und in der Substratebene nebeneinander, ineinander und/oder zu der Substratebene vertikal übereinander gebildeten Spiralstrukturen (305a bis 305d) ist.

15. Monolithisch integrierte Schaltkreis-Anordnung (100; 200; 300) nach einem der Ansprüche 1 bis 14,
bei welcher der Permanentmagnet (102, 107; 207; 304a bis 304d) freischwebend oberhalb des Substrats (101; 201; 301) angeordnet ist und mittels mindestens einen elastischen Federelements (303a bis 303d) mit dem Substrat(101; 201; 301) gekuppelt ist.

16. Monolithisch integrierte Schaltkreis-Anordnung (100; 200; 300) nach einem der Ansprüche 1 bis 15,
bei welcher der Permanentmagnet (102, 107; 207; 304a bis 304d) derart eingerichtet ist, dass seine Magnetisierungsrichtung sich im Wesentlichen orthogonal zu der Oberfläche des Substrats (101; 201; 301) erstreckt.

17. Monolithisch integrierte Schaltkreis-Anordnung(100; 200; 300) nach Anspruch 15 oder 16,
bei welcher der Permantentmagnet (102, 107; 207; 304a bis 304d) die Mehrzahl von Zungenstrukturen (304a bis 304d) aufweist und bei der das System aus dem mindestens einen elastischen Federelement (303a bis 303d) und der Mehrzahl von Zungenstrukturen (304a bis 304d) auf eine vorgebbare Resonanzfrequenz angepasst ist.

18. Monolithisch integrierte Schaltkreis-Anordnung (100; 200; 300) nach Anspruch 15 oder 16,
bei welcher der Permantentmagnet (102, 107; 207; 304a bis 304d) die Mehrzahl von Zungenstrukturen (304a bis 304d) aufweist und bei der eine Mehrzahl von elastischen Federelementen (303a bis 303d) vorgesehen ist, wobei das System aus der Mehrzahl von elastischen Federelementen (303a bis 303d) und der Mehrzahl von Zungenstrukturen (304a bis 304d) auf mehrere unterschiedliche vorgebbare Resonanzfrequenzen oder mindestens ein vorgebbares Band von Resonanzfrequenzen angepasst ist.

19. Monolithisch integrierte Schaltkreis-Anordnung (100; 200; 300) nach einem der Ansprüche 1 bis 18,
bei der ein erster Permanentmagnet (102, 107; 207; 304a bis 304d) relativ zu einer ersten Induktivität (103; 206; 305a bis 305d) in einer ersten Richtung in der Substratebene beweglich eingerichtet ist und bei der ein zweiter Permanentmagnet (102, 107; 207; 304a bis 304d) relativ zu einer zweiten Induktivität (103; 206; 305a bis 305d) in einer zu der ersten Richtung orthogonalen zweiten Richtung in der Substratebene beweglich eingerichtet ist.

20. Monolithisch integrierte Schaltkreis-Anordnung (100; 200; 300) nach einem der Ansprüche 1 bis 19,
bei der zwischen dem Substrat (101; 201; 301) einerseits und dem Permanentmagneten (102, 107; 207; 304a bis 304d) und der Induktivität (103; 206; 305a bis 305d) andererseits ein Magnetfeldabschirmbereich (204) gebildet ist, der zum Abschirmen des Magnetfelds des Permanentmagneten (102, 107; 207; 304a bis 304d) in dem Substrat (101; 201; 301) eingerichtet ist.

## Claims

1. A monolithic integrated circuit arrangement (100; 200; 300)
• having a substrate (101; 201; 301);
• having a functional unit formed in and/or on the substrate (101; 201; 301);
• having an energy supply unit, which is formed in and/or on the substrate (101; 201; 301) and is coupled to the functional unit and has an inductance (103; 206; 305a to 305d) and a permanent magnet (102, 107; 207; 304a to 304d), which are set up in such a way that, under the action of a vibration on the circuit arrangement (100; 200; 300), the permanent magnet (102, 107; 207; 304a to 304d) can be moved relative to the inductance (103; 206; 305a to 305d) parallel to the substrate plane in such a way that an electrical induced voltage for autonomous supplying the functional unit with electrical energy can be induced by means of the inductance (103; 206; 305a to 305d), and the permanent magnet (102, 107; 207; 304a to 304d) having one or a plurality of comb structures (102, 107; 207) or one or a plurality of tongue structures (304a to 304d).

2. The monolithic integrated circuit arrangement (100; 200; 300) as claimed in claim 1,
in which the substrate (101; 201; 301) is a semiconductor substrate.

3. The monolithic integrated circuit arrangement (100; 200; 300) as claimed in claim 1 or 2,
in which the functional unit is a sensor.

4. The monolithic integrated circuit arrangement (100; 200; 300) as claimed in claim 3,
in which the sensor is
• a rotational speed sensor;
• a temperature sensor;
• a pressure sensor;
• a chemical sensor;
• a gas sensor;
• a biosensor;
• a radiation sensor; and/or
• a sensor for detecting a vibration frequency.

5. The monolithic integrated circuit arrangement (100; 200; 300) as claimed in one of claims 1 to 4,
which is set up for fitting to a vibration source.

6. The monolithic integrated circuit arrangement (100; 200; 300) as claimed in claim 5,
in which the vibration source has a motor.

7. The monolithic integrated circuit arrangement (100; 200; 300) as claimed in one of claims 1 to 6,
which has a communication interface for contactless communication with an external control unit.

8. The monolithic integrated circuit arrangement (100; 200; 300) as claimed in one of claims 1 to 7,
in which the energy supply unit has a rectifier device (306) for rectifying an induced voltage of the inductance (103; 206; 305a to 305d), for supplying the functional unit with a DC voltage.

9. The monolithic integrated circuit arrangement (100; 200; 300) as claimed in one of claims 1 to 8,
in which the energy supply unit has an energy storage unit, in which electrical charge carriers generated by means of the induced voltage can be buffer-stored.

10. The monolithic integrated circuit arrangement (100; 200; 300) as claimed in claim 9,
in which the energy storage unit is formed from a capacitance.

11. The monolithic integrated circuit arrangement (100; 200; 300) as claimed in one of claims 1 to 10,
in which the inductance (103; 206; 305a to 305d) is an electrically conductive meander structure (103; 206).

12. The monolithic integrated circuit arrangement (100; 200; 300) as claimed in one of claims 1 to 10,
in which the inductance (103; 206; 305a to 305d) is an arrangement of a plurality of electrically conductive meander structures (103; 206) formed in the substrate plane one next to the other, one in the other and/or vertically one above the other with respect to the substrate plane.

13. The monolithic integrated circuit arrangement (100; 200; 300) as claimed in one of claims 1 to 10,
in which the inductance (103; 206; 305a to 305d) is an electrically conductive spiral structure (305a to 305d).

14. The monolithic integrated circuit arrangement (100; 200; 300) as claimed in one of claims 1 to 10,
in which the inductance (103; 206; 305a to 305d) is an arrangement of a plurality of electrically conductive spiral structures (305a to 305d) formed in the substrate plane one next to the other, one in the other and/or vertically one above the other with respect to the substrate plane.

15. The monolithic integrated circuit arrangement (100; 200; 300) as claimed in one of claims 1 to 14,
in which the permanent magnet (102, 107; 207; 304a to 304d) is arranged in a manner suspended freely above the substrate (101; 201; 301) and is coupled to the substrate (101; 201; 301) by means of at least one elastic spring element (303a to 303d).

16. The monolithic integrated circuit arrangement (100; 200; 300) as claimed in one of claims 1 to 15,
in which the permanent magnet (102, 107; 207; 304a to 304d) is set up in such a way that its magnetization direction extends essentially orthogonally with respect to the surface of the substrate (101; 201; 301).

17. The monolithic integrated circuit arrangement (100; 200; 300) as claimed in claim 15 or 16,
in which the permanent magnet (102, 107; 207; 304a to 304d) comprises the plurality of tongue structures (304a to 304d) and in which the system comprising the at least one elastic spring element (303a to 303d) and the plurality of tongue structures (304a to 304d) is adapted to a predeterminable resonant frequency.

18. The monolithic integrated circuit arrangement (100; 200; 300) as claimed in claim 15 or 16,
in which the permanent magnet (102, 107; 207; 304a to 304d) comprises the plurality of tongue structures (304a to 304d) and in which a plurality of elastic spring elements (303a to 303d) are provided, the system comprising the plurality of elastic spring elements (303a to 303d) and the the plurality of tongue structures (304a to 304d) being adapted to a plurality of different predeterminable resonant frequencies or at least one predeterminable band of resonant frequencies.

19. The monolithic integrated circuit arrangement (100; 200; 300) as claimed in one of claims 1 to 18,
in which a first permanent magnet (102, 107; 207; 304a to 304d) is set up such that it can be moved relative to a first inductance (103; 206; 305a to 305d) in a first direction in the substrate plane and in which a second permanent magnet (102, 107; 207; 304a to 304d) is set up such that it can be moved relative to a second inductance (103; 206; 305a to 305d) in a second direction orthogonally to the first direction in the substrate plane.

20. The monolithic integrated circuit arrangement (100; 200; 300) as claimed in one of claims 1 to 19,
in which a magnetic field shielding region (204) is formed between the substrate (101; 201; 301), on the one hand, and the permanent magnet (102, 107; 207; 304a to 304d) and the inductance (103; 206; 305a to 305d), on the other hand, and is set up for shielding the magnetic field of the permanent magnet (102, 107; 207; 304a to 304d) in the substrate (101; 201; 301).

## Revendications

1. Circuit (100 ; 200 ; 300) intégré monolithique
• comprenant un substrat (101 ; 201 ; 301) ;
• comprenant une unité fonctionnelle formée dans et/ou sur le substrat (101 ; 201 ; 301) ;
• comprenant une unité d'alimentation en énergie qui est formée dans et/ou sur le substrat (101 ; 201 ; 301), qui est couplée à l'unité fonctionnelle, qui a une inductance (103 ; 206 ; 305a à 305d) et un aimant (102, 107 ; 207 ; 304a à 304d) permanent et qui est telle que, sous l'effet d'une vibration sur le circuit (100 ; 200 ; 300), l'aimant (102, 107 ; 207 ; 304a à 304d) permanent est mobile par rapport à l'inductance (103 ; 206 ; 305a à 305d) parallèlement au plan du substrat, de sorte qu'au moyen de l'inductance (103 ; 206 ; 305a à 305d), une tension d'induction électrique peut être induite pour l'alimentation autonome de l'unité fonctionnelle en énergie électrique et l'aimant (102, 107 ; 207 ; 304a à 304d) permanent a une ou une pluralité de structures (102, 107 ; 207) en peigne ou une pluralité de structures (304a à 304d) en languette.

2. Circuit (100 ; 200 ; 300) intégré monolithique suivant la revendication 1,
dans lequel le substrat (101 ; 201 ; 301) est un substrat semi-conducteur.

3. Circuit (100 ; 200 ; 300) intégré monolithique suivant la revendication 1 ou 2,
dans lequel l'unité fonctionnelle est un capteur.

4. Circuit (100 ; 200 ; 300) intégré monolithique suivant la revendication 3,
dans lequel le capteur est
• un capteur de nombre de tours ;
• un capteur de température ;
• un capteur de pression ;
• un capteur chimique ;
• un capteur de gaz ;
• un biocapteur ;
• un capteur de rayonnement ; et/ou
• un capteur de détection d'une fréquence de vibration.

5. Circuit (100 ; 200 ; 300) intégré monolithique suivant l'une des revendications 1 à 4,
qui est agencé pour être mis sur une source de vibration.

6. Circuit (100 ; 200 ; 300) intégré monolithique suivant la revendication 5,
dans lequel la source de vibration a un moteur.

7. Circuit (100 ; 200 ; 300) intégré monolithique suivant l'une des revendications 1 à 6,
qui a une interface de communication pour la communication sans contact avec une unité extérieure de commande.

8. Circuit (100 ; 200 ; 300) intégré monolithique suivant l'une des revendications 1 à 7,
dans lequel l'unité d'alimentation en énergie a un dispositif (306) redresseur pour redresser une tension d'induction de l'inductance (103 ; 206 ; 305a à 305d), afin d'alimenter l'unité fonctionnelle en un tension continue.

9. Circuit (100 ; 200 ; 300) intégré monolithique suivant l'une des revendications 1 à 8,
dans lequel l'unité d'alimentation en énergie a une unité d'emmagasinage d'énergie dans laquelle des porteurs de charge électriques engendrés au moyen de la tension d'induction peuvent être emmagasinés intermédiairement.

10. Circuit (100 ; 200 ; 300) intégré monolithique suivant la revendication 9,
dans lequel l'unité d'emmagasinage d'énergie est formée d'une capacité.

11. Circuit (100 ; 200 ; 300) intégré monolithique suivant l'une des revendications 1 à 10,
dans lequel l'inductance (103 ; 206 ; 305a à 305d) est une structure (103 ; 206) sinueuse conductrice de l'électricité.

12. Circuit (100 ; 200 ; 300) intégré monolithique suivant l'une des revendications 1 à 10,
dans lequel l'inductance (103 ; 206 ; 305a à 305d) est un dispositif constitué d'une pluralité de structures (103 ; 206) sinueuses conductrices de l'électricité, formées côte à côte et l'une dans l'autre dans le plan du substrat et/ou superposées verticalement par rapport au plan du substrat.

13. Circuit (100 ; 200 ; 300) intégré monolithique suivant l'une des revendications 1 à 10,
dans lequel l'inductance (103 ; 206 ; 305a à 305d) est une structuré (305a à 305d) en spirale conductrice de l'électricité.

14. Circuit (100 ; 200 ; 300) intégré monolithique suivant l'une des revendications 1 à 10,
dans lequel l'inductance (103 ; 206 ; 305a à 305d) est un dispositif constitué d'une pluralité de structures (305a à 305d) en spirale conductrices de l'électricité et formées côte à côte et l'une dans l'autre dans le plan du substrat et/ou superposées verticalement par rapport au plan du substrat.

15. Circuit (100 ; 200 ; 300) intégré monolithique suivant l'une des revendications 1 à 14,
dans lequel l'aimant (102, 107; 207; 304a à 304d) permanent est monté librement en suspension au-dessus du substrat (101 ; 201 ; 301) et est couplé au substrat (101 ; 201 ; 301) au moyen d'un élément (303a à 303d) de ressort élastique.

16. Circuit (100 ; 200 ; 300) intégré monolithique suivant l'une des revendications 1 à 15,
dans lequel l'aimant (102, 107 ; 207 ; 304a à 304d) permanent est tel que sa direction d'aimantation s'étend sensiblement orthogonalement à la surface du substrat (101 ; 201 ; 301).

17. Circuit (100 ; 200 ; 300) intégré monolithique suivant la revendication 15 ou 16,
dans lequel l'aimant (102, 107 ; 207 ; 304a à 304d) permanent a la pluralité de structures (304a à 304d) à languettes et
dans lequel le système constitué du au moins un élément (303a à 303d) de ressort élastique et de la pluralité de structures (304a à 304d) à languettes est adapté à une fréquence de résonance qui peut être prescrite.

18. Circuit (100 ; 200 ; 300) intégré monolithique suivant la revendication 15 ou 16,
dans lequel l'aimant (102, 107 ; 207 ; 304a à 304d) permanent a la pluralité de structures (304a à 304d) à languettes et
dans lequel il est prévu une pluralité d'éléments (303a à 303d) à ressort élastique, le système constitué de la pluralité d'éléments (303a à 303d) à ressort élastique et de la pluralité de structures (304a à 304d) à languettes étant adapté à plusieurs fréquences de résonance différentes pouvant être prescrites ou au moins à une bande pouvant être prescrite de fréquence de résonance.

19. Circuit (100 ; 200 ; 300) intégré monolithique suivant l'une des revendications 1 à 18,
dans lequel un premier aimant (102, 107 ; 207 ; 304a à 304d) permanent est monté mobile par rapport à une première inductance (103 ; 206 ; 305a à 305d) dans une première direction dans le plan du substrat, et dans lequel un deuxième aimant (102, 107 ; 207 ; 304a à 304d) permanent est monté mobile par rapport à une deuxième inductance (103 ; 206 ; 305a à 305d) dans une deuxième direction dans le plan du substrat orthogonale à la première direction.

20. Circuit (100 ; 200 ; 300) intégré monolithique suivant l'une des revendications 1 à 19,
dans lequel il est formé, entre le substrat (101 ; 201 ; 301), d'une part, et l'aimant (102, 107 ; 207 ; 304a à 304d) permanent et l'inductance (103 ; 206 ; 305a à 305d), d'autre part, une zone (204) de blindage du champ magnétique qui est aménagée pour le blindage du champ magnétique de l'aimant (102, 107 ; 207 ; 304a à 304d) permanent dans le substrat (101 ; 201 ; 301).
